# EUROPEAN PATENT APPLICATION

(11) **EP 3 043 575 A1**
(43) Date of publication of application: **13.07.2016**
(21) Application number: 15000020.6
(22) Date of filing: 08.01.2015
(51) Int. Cl.: H04W 4/00, H04W 4/06, H04W 4/18, H04L 29/06, H04L 29/08

(54) **Method of establishing a communication with a Bluetooth Low Energy application running on a mobile station**

(71) Applicant: Giesecke & Devrient GmbH, 81677 München (DE)
(72) Inventor: Tea, Vui Huang, SE-12061 Stockholm (SE)

(57) **Abstract**

The invention relates to a method of establishing a communication with an application (112) running on a mobile station (110) and being based on the Bluetooth Low Energy (BLE) protocol. The mobile station (110) is communicatively connected to a wireless network and provides a converter (114a) on the mobile station (110), which constitutes a virtual BLE device. The mobile station (110) receives a cell broadcast message (130) from a base station (120) of the wireless network by the converter (114a). Furthermore, it converts the cell broadcast message (130) into a BLE message (134) according to the BLE protocol and forwards the message from the converter (114a) to the BLE application (112).

## Description

The invention relates to a method of establishing a communication with an application running on a mobile station and being based on the Bluetooth Low Energy (BLE) protocol, the mobile station being communicatively connected to a wireless network. The invention further relates to a mobile station.

Bluetooth Low Energy (BLE) is a wireless personal area network technology designed for applications in healthcare, fitness, security, and home entertainment industries. Compared to "classic" Bluetooth, BLE is intended to provide considerably reduced power consumption and cost while maintaining a similar communication range. Mobile operating systems including iOS, Android, Windows Phone and BlackBerry natively support BLE. It is expected that a vast majority of Bluetooth-enabled smartphones will support the low energy standard in the near future.

BLE is meant to be widely pervasive. Its open, application-friendly interface and broad interoperability will make it the de-facto mobile phone accessory interface of choice in the future. Hence, it would be desirable to have BLE networks enabling the use of BLE applications running on mobile stations, such as smartphones, laptop computers, and so on. However, deployment and maintenance costs of a BLE network are considerable as each BLE device's theoretical maximum range is 50 m.

In a conventional mobile network architecture, such as a GSM, GPRS or UMTS network, Base Transceiver Stations (BTS) and Base Station Controller (BSC) take care of radio controlled related functions and provide air interface to mobile phones to connect with the network. To provide, for example, a GSM service, a region or city on earth is divided into various cells. The cell size is usually about 100 m to about 35 km. BTS coverage is limited to this cell. Like this many BTSs cover entire region. The BTSs are interfaced with one BSC in various ways, for example, a mash, a star etc. In suburban areas, masts are commonly spaced 2 km to 3 km apart and in dense urban areas, masts may be as close as 400 m to 800 m apart. The maximum range of a mast (where it is not limited by interference with other masts nearby) depends on the same circumstances.

Assuming that Base stations of a conventional GSM network are 600 m apart and BLE average range is 30 m, then the number of BLE devices needed to cover the equivalent area is roughly 10 x 10 + 9 x 9 = 181. Assuming 600 conventional Base stations in a city, then the number of BLE devices required to cover this area would be 181 x 600 = 96.600 BLE devices, provided that the BLE devices build a BLE network. It is to be noted that the mentioned number is for one BLE service only. If more than one BLE services are to be offered, then the number of devices has to be multiplied by the number of intended BLE services.

Since the BLE devices are mobile devices which are battery powered, the batteries of BLE devices will run out and need replacement. The BLE device itself may break down and need replacing itself. As a result, the field maintenance will become extremely prohibitive and time consuming.

US 7,444,133 B1 discloses the provision of broadcast services, such as cell broadcast, in conventional GSM systems. In case, a cell broadcast is made all clients of such systems receive the broadcast massage. Conventional systems are unable to place limitations on which clients are able or authorized to receive specific broadcast massages. The system suggested in US 7,444,133 B1 provides information services via broadcast massages to mobile stations and other devices. The broadcast massages are encrypted prior to being communicated to devices within a geographic area. A client application retrieves cryptographic keys associated with the information services to which a customer is subscribed. After having received the encrypted broadcast massages, the client application determines if it has a cryptographic key to decrypt the massage. If so, the information contained in the massage is displayed. If not, then the message is ignored by the mobile station. A communication within the system may use a short-range wireless communication link, such as Bluetooth. The device may be an automobile that communicates with the mobile station to enable the car's communication system to pull information from the mobile station.

DE 602 19 076 T2 discloses cell broadcasting of Short Message Services (SMS) to a computer which transfers the short message via Bluetooth to a mobile device.

It is an object of the present invention to provide a method and a mobile station being capable of establishing a communication via Bluetooth Low Energy without the need of setting up a dedicated BLE network.

This object is solved by a method according to claim 1 and a mobile station according to claim 16. Preferred embodiments are set out in the dependent claims.

According to the invention, a method of establishing a communication with an application running on a mobile station and being based on the Bluetooth Low Energy (BLE) protocol is suggested, the mobile station being communicatively connected to a wireless network. The method comprises the steps of a) providing a converter on the mobile station, the converter constituting the virtual device; b) receiving a cell broadcast message from a base station of the wireless network by the converter; c) converting the cell broadcast message into a BLE message according to the BLE protocol; and d) forwarding the message from the converter to the BLE application.

Cell broadcast messaging is a mobile technology feature and part of the GSM standard. It is also known as Short Message Service-Cell Broadcast (SMS-CB). Cell broadcast is designed for simultaneous delivery to multiple users in a specified area. Whereas the Short Message Service-Point to Point (SMS-PP) is a one-to-one and one-to-a-view service which requires multiple SMS messages as each message can only carry one phone number. In contrast, cell broadcast is a one-to-many geographically focused messaging service. Cell broadcast messaging is also supported by UMTS (Universal Mobile Telecommunications System).

According to the invention, the network infrastructure of conventional mobile network, such as a GSM/GPRS/UMTS network, is repurposed and converted into infinite BLE devices. The mobile station, such as a mobile phone or a laptop computer, is adopted to have a convertor that functions as a virtual BLE device. In conjunction with all broadcast messages, it is possible, to transmit BLE messages over wide distances by using the conventional network infrastructure of a mobile network.

According to a preferred embodiment of the invention, the step of converting the cell broadcast message into a BLE message comprises a conversion according to the Generic Attribute Profile (GATT). Bluetooth SIG defines several profiles for low energy devices. Current low energy application profiles are based on GATT, which is a general specification for sending and receiving short pieces of data known as attributes over a low energy link. Manufacturers are expected to implement the appropriate specifications for their device in order to ensure compatibility. A BLE device may contain implementations of multiple profiles.

The communication between the converter and the BLE application within the mobile station may be bidirectional using BLE messages according to the BLE protocol. In contrast, if the converter constituting a virtual BLE device wants to transmit a message to the base station of the wireless network, this may be carried out via a dedicated communication channel from the converter to the base station using Short Message Service (SMS) or a Unstructured Supplementary Service Data (USSD) or a message according to the Hypertext Transfer Protocol (HTTP).

The BLE application may be assigned to a peripheral role according to the BLE protocol and the converter may be assigned to a central role according to the BLE protocol in a BLE connection between the converter and the BLE application. The roles and responsibilities that apply when a mobile station interacts with a physical BLE device are "central" versus "peripheral": this applies to the BLE connection itself. The device in the central role scans, looking for advertisement, and the device in the peripheral role makes the advertisement.

According to a further embodiment, one of the converters in the BLE application is a server and the other is a client after the BLE connection between the converter and the BLE application has been established. This determines how two devices talk to each other once they have established the BLE connection. Generally, the BLE application in the mobile station supports the central role. The converter and virtual BLE device, respectively, support the peripheral role. Once the BLE application and the converter and virtual BLE device, respectively, have established a connection, they start transferring metadata to one another. Depending on the kind of data they transfer, one or the other may act as the server.

According to a further embodiment, the cell broadcast message contains data which is used as logic and information to respond to BLE connection requests and commands from the BLE application. In this regard BLE protocols and data formats such as GATT are used.

The cell broadcast message may contain BLE service and descriptor data for the converter. The cell broadcast message may contain a list of at least one of an index of BLE service UUIDs and its corresponding cell broadcast message identifier and a serial number and page values. This enables to efficiently pick up the correct set of data which are broadcasted in a loop over the coverage area of the base station of the wireless (mobile) network. These data can be encrypted such that a subscription-paid model can be charged for the usage of these virtual BLE devices. As cell broadcast messages are centrally controlled, virtual BLE devices can be added and removed rapidly by an operator of the wireless network.

According to a further preferred embodiment, a cell broadcast message is evaluated after the BLE application has made a request for available BLE devices.

According to a further preferred embodiment, after a BLE connection between the converter and the BLE application has been established or set up, cell broadcast channels and/or message identifiers associated with a converter are monitored.

Furthermore, data in the cell broadcast message may be mapped to various virtual BLE applications and services, respectively, which are to be identified by a UUID. This relates to reading BLE attributes. Once, the BLE application has connected to a BLE server and discovered services, it can read and write attributes, where supported.

According to a further preferred embodiment, a write operation towards a destination specified in the same broadcast message is carried out via a communication channel from the converter to the base station using a Short Message Service or a USSD number or a URL address. This write operation is directed towards a destination specified in the SMS-CB data which has been broadcast from the base station to the mobile station. The write operation is accompanied with an identifier (ID) such as the MSISDN, hence allowing the user's data to be stored in the cloud for this virtual BLE device.

BLE is designed to grow in structure and services, hence new versions of firmware will be required to upgrade deployed BLE devices or fix bugs in existing firmware. Field maintenance is extremely prohibitive and time consuming. Hence, a mechanism is suggested which is able to measure the Quality of Service (QoS) from outside a physical BLE device and placed in the position of the intended targets.

According to a further preferred embodiment, the BLE application is adapted to scan and query a status of (physical) BLE mobile devices in the range of the mobile station for monitoring at least one predetermined criterion. This extends the functionality to include for the management and QoS monitoring of physical BLE devices by using the mobile station as an intermediary to link a server to a physical BLE device. This forms an exceptionally natural and synergistic end-to-end flow as the server will have in-depth knowledge and is able to manage every single component along the entire chain.

A mobile station configured with a BLE management client software (i.e. the BLE application) scans and queries statuses of BLE devices in its range. The mobile station then relays the information to a BLE management server communicatively connected to the mobile network, together with the physical BLE device identity and location. The BLE device identity and location represent a predetermined criterion each. An administrator of the BLE devices can connect to the server to remotely view the status of the BLE devices in the field. In case that the physical BLE devices goes off the air or behaves unusually, countermeasures may be initiated.

According to a further preferred embodiment, the mobile station forwards the queried status or statuses together with an identity and/ or location of a respective BLE mobile device to a server communicatively connected to the mobile network.

A server connected to the base station of the mobile network can remotely perform an Over-The-Air (OTA) update and patch a firmware on the BLE devices. The server can do this by sending the firmware or patch to the mobile station associated with physical BLE device (BLE mobile device) or notify the physical BLE device as an update or a patch is needed. In the latter case, the mobile station will proceed to download the respective firmware in question. Once the mobile station has received the firmware, it can securely and wirelessly update or patch the physical BLE devices that match criteria set by the server.

According to a further aspect, a mobile station being communicatively connected to a wireless network and comprising at least one converter, the converter being a virtual BLE device adapted to receive a cell broadcast message from a base station of the wireless network, adapted to convert the cell broadcast message into a message according to the BLE protocol and to forward the message to the BLE application is suggested. The same advantages as already stated above apply to the mobile station.

The mobile station according to the invention may further comprise means to carry out the method according to the method as explained above.

The invention will be explained in more detail by reference to the accompanying figures.
- Fig. 1: shows a schematic diagram illustrating a mobile station according to the invention communicatively connected to a base station of a mobile network for conducting the method according to the invention.
- Fig. 2: shows a table illustrating example GATT data of the Bluetooth Low Energy protocol.
- Fig. 3: illustrates a table containing an example of specifically-coded SMS-CB data.
- Fig. 4: shows a table illustrating a sample index of a number of virtual BLE devices mapped to cell broadcast channels and message IDs.
- Fig. 5: illustrates a schematic diagram illustrating the managing of BLE devices via a mobile station.
- Fig. 6: illustrates a sample of information used for maintenance of physical BLE devices.

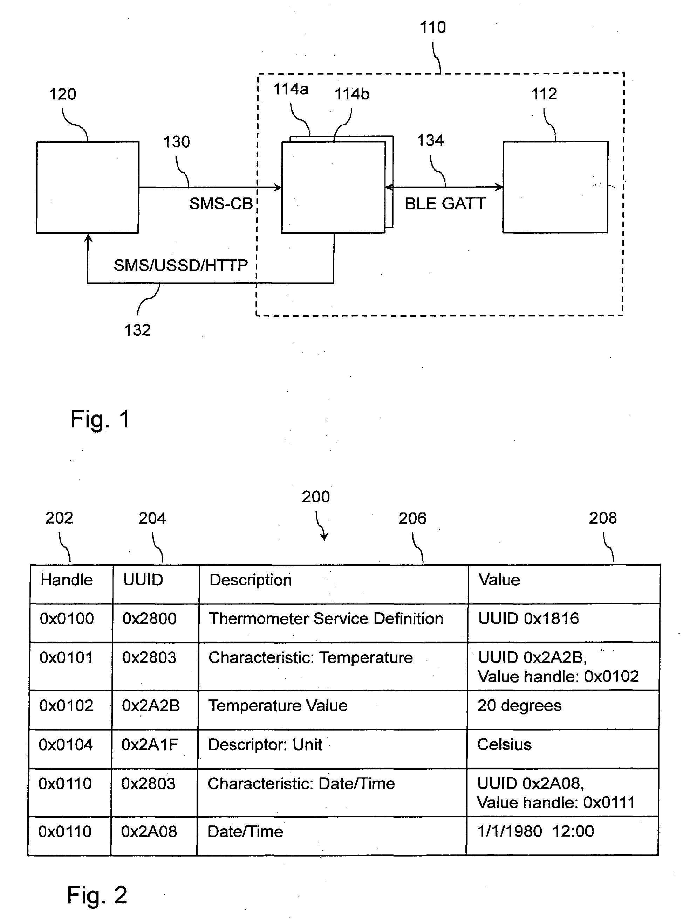

Fig. 1 shows a schematic diagram of a mobile station 110 according to the invention. The mobile station 110 is physical equipment, such as a mobile phone or a laptop computer, that is used by mobile subscribers with a subscriber identity module (SIM). The mobile station 110 is communicatively connected to a mobile network. The mobile network includes among others a base station 120, at least one Base Transceiver Station (BTS) and a Base Station Controller (BSC) where BTS and BSC are not shown in Fig. 1. The mobile station 110 comprises a Bluetooth Low Energy (BLE) application 112 and at least one converter 114a, 114b which constitute a virtual BLE device each.

As will be apparent from the description below a communication between the BLE application 112 and the converter 114a, 114b, i.e. the virtual BLE device, takes place using BLE messages 134 according to the BLE protocol. For example, the BLE messages 134 is based on protocols and data formats such as GATT. GATT is a general specification for sending and receiving short pieces of data known as attributes over a low energy link. GATT has the following terminology:
A "client" is a device that initiates GATT commends and requests, and accepts responses. A "client" is, for example, a mobile phone or a computer.
A "server" is a device that receives GATT commends and requests, and returns responses. A "server" is, for example, a temperature sensor.
A "characteristic" is a data value transferred between client and server, for example, current battery voltage.
A "service" is a collection of related characteristics, which operate together to perform a particular function. For instance, a health thermometer service includes characteristics for a temperature measurement value, and a time interval between measurements.
A "descriptor" provides additional information about a characteristic. For example, a temperature measurement value characteristic may have an indication of its units (e.g. Celsius), and the maximum and minimum values which a sensor can measure. Descriptors are optional. Each characteristic can have any number of descriptors.

The roles and responsibilities that apply when the mobile station 110 interacts with a BLE device are:
"Central" versus "peripheral": This relates to the BLE connection between the BLE application 112 and the virtual BLE device 114a, 114b of the mobile station 110 itself. The virtual BLE device 114a, 114b in the central role scans, looking for an advertisement, and the device in the peripheral role makes the advertisement.
"Server" versus "client": This determines how the devices talk to each other once they have established the BLE connection.

A communication between the mobile station 110 and the base station 120 of the mobile network takes place by means of cell broadcast (CB) messages 130. Cell broadcast messages are known as Short Message Service-Cell Broadcast (SMS-CB). CB messaging is a one-to-many geographically focused messaging service which is supported by GSM and UMTS. As to the nature of SMS-CB the communication from the base station 120 to the mobile station 110 is a one-way broadcast. In detail, a SMS-CB is received by the converter 114a,114b, i.e. the virtual BLE device. A return channel from the mobile station 110 to the base station 120 of the wireless or mobile network is made by way of communication channel 132 using SMS (Short Message Service), USSD (Unstructured Supplementary Service Data) or a URL address according to the Hypertext Transfer Protocol (HTTP).

A cell broadcast message page is composed of 82 octets, which, using a default character set, can encode 93 characters. Up to 15 of these pages may be concatenated to form a CB message 130. Each page of such a CB message 130 will have the same message identifier indicating the source of the message and the same serial number. Using this information, the BLE application 114a, 114b is able to identify and ignore broadcasts of already received messages.

CB messages 130 are a series of "channels" and "pages" broadcast in a loop over the coverage area of the mobile networks base station 120. To efficiently pick up the correct set of data, a CB designated channel is used to broadcast an index of BLE service UUIDs and its corresponding CB message identifier, serial number and page values etc. These corresponding sections contain all the relevant BLE service and descriptor data for the virtual BLE device 114a, 114b. These data can optionally be encrypted such that a subscription paid-model can be charged for the usage of these virtual BLE devices 114a, 114b. CB messages 130 are centrally controlled, virtual BLE devices 114a, 114b can be added and removed rapidly when determined by an operator of the mobile network.

Using a mobile station 110 as described above enables repurposing the mobile network infrastructure and to convert it into infinite BLE devices. In particular, the introduction of the converter 114a, 114b within the mobile station 102 enables the mobile station 110 to function as a virtual BLE device.

In general, the mobile station 110 listens to and receives specially codes SMS-CB messages 130 from the base station 120 of the mobile network. The mobile station uses the data contained in the SMS-CB message 130 as logic and information to respond to BLE connection requests and commands from the mobile station's 110 BLE application 112 using BLE protocols and data formats, such as GATT.

According to the method of the invention, the BLE application supports the central role. The convertor 114a, 114b, i.e. the BLE virtual devices, supports the peripheral role. Once the BLE application and the BLE virtual device have established a BLE connection, they start transferring GATT meta data to one another. Depending on the kind of data they transfer, one or the other may act as the server.

For example, if the virtual BLE device 114a, 114b wants to report location data to the BLE application, the virtual BLE device 114a, 114b should act as server. If the virtual BLE device 114a, 114b wants to receive updates from the BLE application 112, the BLE application 112 should act as server. If the BLE application would like to safe or send data to the virtual BLE device 114a, 114b, the virtual BLE device sends the data to the virtual BLE device server via the communication channel indicated by 132 which supports uplink of data to the base station 120 of the mobile network.

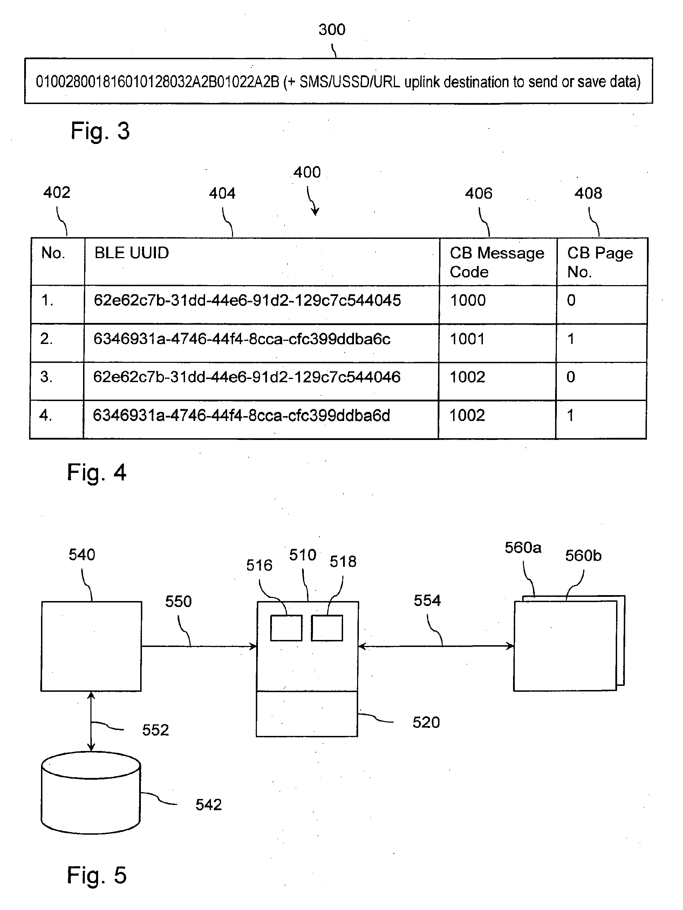

The sole building block of GATT is the attribute. An example of such GATT data is illustrated in the table of Fig. 2. An attribute is composed by three elements, namely a 16-bit handle 202, an UUID 204 which defines the attribute type, and a value 208 of a certain length. Furthermore, a description 206 of the handle 202 is part of the table 200 of Fig. 2. Fig. 3 shows an example of specially coded SMS-CB data.

When the BLE application 112 of the mobile station 110 scans for a available (virtual) BLE devices 114a, 114b (not only of this mobile station 110 but also mobile stations communicatively connected to the base station 120), an index list of all BLE service UUIDs present in the SMS-CB 130 broadcast message that is accessible by the user to the BLE application 112 is returned. A sample index of virtual BLE devices mapped to CB channels and message IDs is illustrated in the table in Fig. 4. The table consists of a number 402, a BLE UUID 404, a CB message code 406 and a CB page number 408. A CB message code 406 differentiates between CB messages from the same source and type, i.e. messages with the same message identifier. CB messages codes 406 are for an allocation by network operators. The message code 406 identifies different message schemes.

For example, let the value of the message identifier be "Automotive Association" (= source), "Traffic Reports" (type). Then, "Crash on A1 J5" could be one value for the message code, "Cow on A32 J4" could be another, and "Slow Vehicle on M3 J3", yet another. The CB page parameter is a single octet field used to represent the CB page number in the sequence and the total number of pages in the SMS-CB message 130. The serial number is a two octet field which identifies a particular message. It is linked to the message identifier and is altered every time when the message is changed.

The same technique can be applied to NFC (Near Field Communication) as well. Whereby SMS-CB can be used for a wide-area virtual "macro" BLE, NFC can be used for up-close virtual "nano" BLE. SMS can also be used for mid-range virtual "micro" BLE. That means, an incoming SMS-CB data format is converted to BLE GATT data format. An incoming NFC NDEF data format is converted to BLE GATT data format, and an incoming SMS-push is converted to BLE GATT data format.

After all virtual BLE devices available for the BLE application 112 of the mobile station 110 have been evaluated, in the next step a connection is set up. When the BLE application 112 of the mobile station 110 connects to a virtual BLE device 114a, 114b, the CB channels and message IDs that are associated with a selected virtual BLE device 114a, 114b are monitored. That means, if, for example, BLE UUID AABBCCDD is selected, then based on the index list as illustrated in Fig. 4, the invention starts monitoring CB channels 1200 and/or message ID 88. Once the BLE application 112 has connected to a GATT server and discovered services, the BLE application 112 can read and write attributes, where supported. The data in the SMS-CB message 130 is mapped to various virtual BLE services identified by the UUID.

As SMS-CB message 130 is a one-way broadcast from the base station 120 to the mobile station 110, any write operation must be directed towards a destination specified in the SMS-CB message data, such as an SMS LA number, a USSD number or a URL address etc. The write operation is accompanied with an ID such as the MSISDN, hence allowing the user's data to be stored in the cloud for this virtual BLE device 114a, 114b. The communication between the mobile station 110 and the base station 120 in case of writing BLE attributes is made via communication channel 132.

It is common for BLE applications 112 to ask to be notified when a particular characteristic changes on the mobile station 110. This can happen when the SMS-CB data is updated or changes. It can also happen when a user travels to different CB coverage area. This enables receiving GATT notifications.

By the method described above, rapid, large-scale and low-cost deployment of BLE services can be achieved.

The performance, reliability and usability of a telecommunications service in the mobile network is controlled by the well-known Quality of Service (QoS) mechanism. A crucial part of BLE QoS is grade of service, involving outage probability, meaning how often is the BLE signal lost, blocked or not detectable from a given position, and connectivity stability, signal strength, connection speed and so on. The BLE performance data are measured by the BLE mobile device (BLE device) and sent to server for devaluation.

Management of subscriptions, cards, subscribers and mobile devices can be performed remote Over-The-Air (OTA). As will be described below, firmware management and monitoring of QoS of BLE devices can be achieved by using a mobile device as an intermediary to link the server to the BLE devices. As an advantage, this forms an exceptionally natural and synergistic end-to-end flow as the server will have in-depth knowledge and be able to manage every single component along the entire chain, starting from remotely provisioning subscription to the SIM card (embedded SIM, eUICC or cloud-based) in the mobile station, remotely provisioning device settings to the mobile station, remotely managing applications on the mobile station, remotely managing firmware on the BLE devices and finally to measure QoS of all BLE devices in the vicinity of the mobile station.

As illustrated in Fig. 5, a mobile station 510 forms an intermediary to link a server 540 to a number of (physical) BLE devices 560a, 560b. The mobile station 510 comprises a BLE antenna 516 and at least one BLE application 518. The BLE application is adapted to handle QoS and Over-The-Air firmware download (OAD). Furthermore, a SIM card 520 is associated with a mobile station 520. A wireless communication channel 554 between the mobile station 510 and the number of BLE devices 560a, 560b is bidirectional and realized by means of the above explained BLE protocols, such as GATT. A communication channel 550 between the mobile station 510 and the server 540 is for example wireless (WiFi or mobile network). The server 540 is communicatively connected (reference numeral 552) to a data base 542 containing QoS data and BLE firmware.

The mobile station 510, such as a mobile phone or a M2M (Machine-to-Machine)-device configured with a BLE management client software scans and queries statuses of the BLE devices 560a, 560b in its range. The mobile station 510 then relays the information to the BLE management server 540, together with the device identity and location. An administrator can connect to the server 540 to remotely view the status of the BLE devices 560a, 560b. They can also be automatically alerted by the server when a BLE device 560a, 560b goes off the air or behaves unusually. BLE device status, measurements and statistics may be obtained by suitable SDK (Software Development Kits) and API (Application Programmable Interfaces) of the party administrating the server 540.

The server 540 can remotely perform an OTA update and patch a firmware of the BLE devices 560a, 560b. It can do this by sending the firmware or patch to the mobile station 510 associated with the BLE devices 560a, 560b. Alternatively, the BLE devices 560a, 560b can be notified that an update or patch is needed. In this case the mobile station 510 can proceed to download the respective firmware in question from the data base 542 connected to the server 540. Once the mobile station 510 has received the firmware, it can securely and wirelessly update and patch the BLE devices 560a, 560b that match criteria set by the server 540.

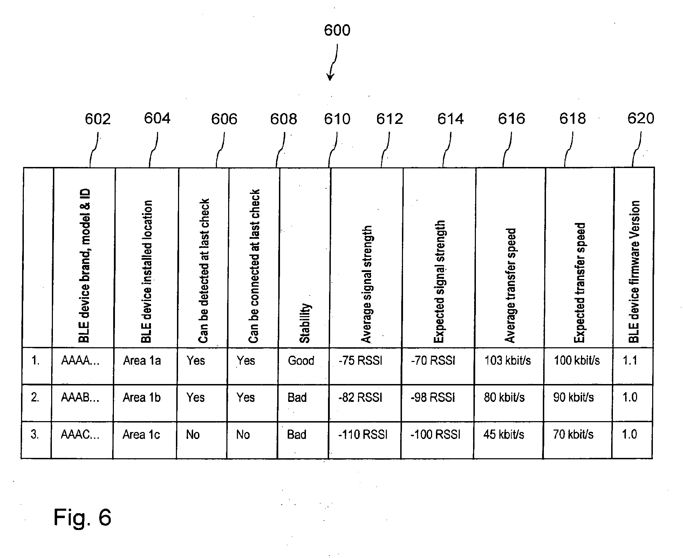

A sample management view from the server and the mobile device is illustrated in the table of Fig. 6. The table outlines several predetermined criteria representing QoS data (606 to 618) together with identifying information of a respective BLE device (602, 604, 620).

The operation of the BLE QoS application 518 on the mobile station 510 is as follows:
Provided that a Bluetooth adapter of the mobile station 510 is available and turned on and Bluetooth Low Energy is supported on the mobile station 510 the BLE QoS application 518 will the start BLE device discovery automatically. Device discovery represents a scanning of BLE devices being in the vicinity of the mobile station 510. During scanning Received Signal Strength Indicator (RSSI) values are measured. On a predefined frequency, the application will also attempt to connect to a BLE device in the detected list. If the connection succeeds, the connection stability and speed is measured.
BLE devices 560a, 560b that include the OAD feature allow a peer device, such as the mobile station 510, to push a new firmware image onto the peripheral device and update the firmware. This feature uses the BIM (Boot Image Manager), in which case the downloaded image gets stored in the opposite flash location as the currently running image. For example, if the "A" image is the current image and is used to perform the download, then the downloaded image becomes the "B" image. Upon reset, the "B" image with the update firmware could be loaded. The OAD feature optionally allows from the firmware image to be signed, for example by using AES (Advanced Encryption Standard). An app on the mobile station 510 will function as a central OAD manager that send firmware images to an OAD target device, i.e. a BLE device. A server can either inform or send the request firmware update to the application of the mobile station 510 with selection criteria on which BLE devices 560a, 560b the update should apply. Criteria used by the mobile station to the update BLE devices 560a, 560b might be: all firmware-compatible BLE devices in range; or BLE devices of specific brand or model; or BLE devices with specific firmware version.

According to a further aspect BLE may be used in payment systems. A payment transaction may be performed ubiquitously in the same way regardless of NFC or BLE technology by using a mobile wallet. This eliminates the need for users to learn different methods for doing payment. Furthermore, a user does not be aware of which technology is being used. BLE mobile payment may be realized by making a mobile wallet an isolation layer to the underlined NFC/BLE technology.

The procedure is as follows:

The mobile wallet scans the mobile station for BLE and/or NFC interfaces and selects one of these interfaces. If BLE is selected by a user of the mobile station the wallet monitors BLE signal strength level as an indicator of signal strength to recognize the closest terminal. The mobile wallet informs the BLE terminal that the BLE terminal has been selected and the mobile wallet identifies itself. Afterwards, BLE terminal authenticates the mobile wallet and in turn identifies itself for authentication by the mobile wallet. Next, a secure communication channel between the mobile wallet and the BLE terminal is created. This communication channel is used for exchanging transaction details between the BLE terminals, i.e. a cashier's point of sale, and a user's wallet.

This provides a seamless BLE payment for users of a mobile station being part of a mobile network and allows for easy and fast adoption without big layout in education. Only one mobile wallet to maintain for a vendor and the mobile network is necessary. It is sufficient to only have one mobile wallet to learn and use. Another advantage is that less support hassle occurs, and fewer new processes that need to be introduced at the operator are involved.

## Claims

1. A method of establishing a communication with an application (112) running on a mobile station (110) and being based on the Bluetooth Low Energy (BLE) protocol, the mobile station (110) being communicatively connected to a wireless network and comprising the steps of:
a) providing a converter (114a) on the mobile station (110), the converter (114a) constituting a virtual BLE device;
b) receiving a cell broadcast message (130) from a base station (120) of the wireless network by the converter (114a);
c) converting the cell broadcast message (130) into a BLE message (134) according to the BLE protocol;
d) forwarding the message from the converter (114a) to the BLE application (112).

2. The method according to claim 1, wherein the step of converting the cell broadcast message (130) into the BLE message (134) comprises a conversion according to the Generic Attribute Profile (GATT).

3. The method according to claim 1 or 2, wherein the communication between the converter (114a) and the BLE application (112) is bidirectional using BLE messages (134) according to the BLE protocol.

4. The method according to one of the preceding claims, wherein the BLE application (112) is assigned to a peripheral role according to the BLE protocol and the converter (114a) is assigned to a central role according to the BLE protocol in a BLE connection between the converter (114a) and the BLE application (112).

5. The method according to one of the preceding claims, wherein one of the converter (114a) and the BLE application (112) is a server and the other is a client after a BLE connection between the converter (114a) and the BLE application (112) has been established.

6. The method according to one of the preceding claims, wherein the cell broadcast message (130) contains data which is used as logic and information to respond to BLE connection requests and commands from the BLE application.

7. The method according to one of the preceding claims, wherein the cell broadcast message (130) contains BLE service and descriptor data for the converter (114a), wherein the content of the cell broadcast message (130) is preferably encrypted.

8. The method according to claim 7, wherein the cell broadcast message (130) contains a list of at least one of an index of BLE service UUIDs and its corresponding cell broadcast message identifier and a serial number and page values, wherein the content of the cell broadcast message (130) is preferably encrypted.

9. The method according to claim 7 or 8, wherein the cell broadcast message (130) is evaluated after the BLE application (112) has made a request for available BLE devices.

10. The method according to one of the preceding claims, wherein, after a BLE connection between the converter (114a) and the BLE application (112) has been established, cell broadcast channels and/or message identifiers associated with the converter (114a) are monitored.

11. The method according to one of the preceding claims, wherein data in the cell broadcast message (130) is mapped to various virtual BLE applications (112) and/or services which are to be identified by a UUID.

12. The method according to one of the preceding claims, wherein a write operation towards a destination specified in the cell broadcast message is carried out via a communication channel from the converter (114) to the base station (120) using a Short Message Service or a USSD number or a URL address.

13. The method according to one of the preceding claims, wherein the BLE application is adapted to scan and query a status of BLE mobile devices (560a, 560b) in the range of the mobile station (510) for monitoring at least one predetermined criterion, wherein the mobile station (510) preferably forwards the queried status or statuses together with an identity and/or location of a respective BLE mobile device (560a, 560b) to a server (540) communicatively connected to the base station.

14. Mobile station (110) being communicatively connected to a wireless network and comprising at least one converter (114a, 114b), the converter (114a, 114b) being a virtual BLE device adapted to receive a cell broadcast message (130) from a base station (120) of the wireless network, adapted to convert the cell broadcast message (130) into a message (134) according to the BLE protocol and to forward the message to the BLE application (112).

15. Mobile station according to claim 16, wherein it comprises further means to carry out the method according to one of the preceding claims 2 to 13.
